# EUROPEAN PATENT APPLICATION

(11) **EP 2 336 093 A1**
(43) Date of publication of application: **22.06.2011**
(21) Application number: 09179148.3
(22) Date of filing: 14.12.2009
(51) Int. Cl.: C03C 17/00, C03C 17/28

(54) **Process for scratch masking of glass containers**

(71) Applicant: Arkema Vlissingen B.V., 4389 PD Vlissingen Oost (NL)
(72) Inventor: Siebenlist, Ronnie, 4343 AD, Kwadendamme (NL); Schuster, Michael, 41569, Rommerskirchen (DE); Hoekmann, Leendert Cornelis, 4461 NM, Goes (NL)
(74) Representative: Sauvageot, Olivier Roger

(57) **Abstract**

The present invention relates to a process for applying oil-in-water emulsions for improving the glass surface appearance, particularly the external surfaces of glass containers. More particularly, the present invention relates to a process for applying a scratch masking coating on glass bottles, which enhances appearance, said process comprising the step of maintaining the oil-in water emulsion in a stabilizing zone during a few seconds to about 300 minutes.

## Description

The present invention relates to a process of applying oil-in-water emulsion(s) onto glass surfaces, particularly the external surfaces of glass containers, in order to improve the appearance of said glass surface(s). More particularly, the present invention relates to a process for applying a scratch masking coating on glass bottles, which enhances appearance.

Glass articles such as returnable bottles are handled a great number of times during manufacture, inspection, filling, shipping, washing etc. During such handling the bottles come into contact with various mechanical devices such as conveyors, inspection devices and the like as well as contact with other glass containers (such as bottles, jars, and the like) and surfaces such as boxes, shelves etc. This high degree of contact causes damage either by breakage, cracking, scratching or other defects of the surface.

The use of scratch- or scuff-masking agents on glass containers is already well known and used. Such masking agents desirably mask scuffs, and exhibit acceptable durability and surface properties. Desirable properties for scuff-masking agents include water resistance and durability while being non-toxic and removable in washing operations, typically alkaline washing operations.

Coatings for glassware can comprise polymeric materials, which cure after application to the bottle surface, either at room temperature or upon heating. For example, US Patent Number 4,273,834 discloses a specific organopolysiloxane and a curing catalyst that are applied to glass articles to mask abrasions. The material is cured on bottle surfaces at room temperature or under heating. US Patent Number 5,346,544 discloses triglyceride materials and fatty acid esters of isopropyl alcohol as a coating for glass containers which are emulsified in water, applied to glass bottles and dried at room temperature or with heating.

US Patents Numbers 4,792,494 and 4,834,950 disclose the use of modified polyethylene preferably in the form of an aqueous dispersion to form a protective coating on glass surfaces. The coating is typically applied at the end of a hot end finishing process whereby residual heat of the glass aids drying in a conventional cold end coating process.

US Patent Number 3,296,173 discloses a protective coating for glass comprising a reaction product of polyvinyl alcohol, an emulsified polyolefin and ammonium chloride. The coating is applied and heated whereby the composition reacts to produce a durable coating.

The variety of designs for glass bottle handling, cleaning and filling operations however results in a number of limitations on the applicability of prior art coating methods. Protective coatings are applied to glass containers during manufacture in either a hot end process and/or cold end process. In single use glass containers, such protective coatings are sufficient to protect against scuffing during the life of the container.

With returnable glass containers, which can be washed and refilled, for example 20 to 60 times or more, the 'production applied' coatings are washed off and protection is lost. As the number of return cycles increases, so does scuffing which results in an undesirable appearance.

In order to provide a better appearance, returned bottles are treated with an anti-scuff coating during each wash/refill cycle. Known coating systems, especially those that rely on heat to cure or dry an applied coating, are not effective on lines where the glass bottles are cool, cooled or chilled.

For other coating systems, such as emulsion based coating systems, instability of the emulsion on the glass surface is desired such that the emulsion breaks and the oil phase coating is deposited on the glass surface. Aqueous emulsion-based coating systems often rely on emulsion destabilization by breaking due to water phase evaporation.

However moisture on the bottles, such as condensation, can adversely impact such systems, and with some coatings, long cure times due to moisture, such as condensation, can adversely impact the coating system. All current products known to date show poor or not satisfactory performances when applied on wet bottles, or on cold bottles which become wet due to condensation, for example during filling of glass bottles or containers, with cold stuffs, typically cold liquids, such as sparkling liquids, e.g. sparkling water, sodas, beer, and the like.

Indeed, the applied product is diluted by the condensation water on the outside of the container, said dilution mainly resulting in a 'rinsing off' of the applied coating, said rinsing off meaning no coating at all.

Solutions to this problem already exist, such as systems relying on emulsion destabilization through the addition of an emulsion destabilizer, or emulsions with high emulsifier concentration.

Emulsions based upon high emulsifier concentration consist in using more concentrated emulsions, because the condensation water dilutes said emulsion. However, using more concentrated emulsions results in a not acceptable coating, since the amount of condensation water strongly varies, due to dew-point variations, so that the use of concentrated emulsions is not satisfying.

An example of addition of emulsion destabilizer is disclosed in EP-A-1 731 227. In this document, the emulsion breaker is an acid, and the result is an improved performance of the desired coating, even in the presence of condensation on the outer parts of the glass containers.

However the use of emulsion breakers, such as acids, suffer from several disadvantages, and it is now highly desirable to use emulsions with a neutral pH, in order to avoid, among others and to recite, the main drawbacks of acid emulsions:
- corrosion issues, for both bottle closure and equipments;
- issues with dyes, especially in labels that are pH sensitive;
- security issues for local workers and end users;
- environmental issues due to acidic effluents that are disposed off.

One other possibility consists in using scratch-masking aqueous emulsions, which can easily break during the coating on the glass containers. Such aqueous emulsions typically are of the oil-in-water type, the oil phase of which may for example contain a low amount of surfactant, say less than 15%, and even less than 10%.

However, depending on layout of filling line(s), a circulation is often created to feed e.g. spray guns, and in these cases, such "unstable" emulsions lead to phase separation already in circulation piping, resulting to overloading or no coating at all.

In brief, all formulations types, scratch-masking techniques, now available to the skilled artisan, have advantages and drawbacks that are summarized herebelow:

| ***Formulation type*** | ***Advantages*** | ***Drawbacks*** |
|---|---|---|
| "Stable" emulsions | Stability | Rinsing off / overloading |
| Emulsions comprising a destabilizer | Stability | Corrosion, security and environmental issues |
| "Unstable" emulsions | Safety, labelling compatibility | unstability |

Evidently, all existing techniques are not satisfying and there is still a need for scratch-masking techniques and processes, which can combine all the advantages without any of the drawbacks outlined here-above.

Now therefore, the main objectives of the present invention are to provide a process to be used on returnable containers in order to face-lift or mask the white reflecting bands (scuff bands) that appear at the container-to-container (or other container to devices or surfaces) contact zones, because of intense glass to glass contact (or glass to devices and the like, as explained above), mainly during the filling process, after several trips of returnable glass containers.

Another objective of the present invention is to provide a process for applying a formulation (a 'masking fluid'), in order to repair the visual aspect of such containers, since the presence of scuff bands strongly reduces the appearance of containers.

A further objective of the present invention consists in providing an efficient scratch-masking or scuff-masking process, especially in case of filling conditions in which containers are filled with cold liquids, and water condensation of moisture at the container surface occurs.

Still another objective is to provide a process allowing the use of not too stable scratch-masking emulsions that would simply be rinsed off or strongly diluted, thereby avoiding the presence of significant higher concentration of active ingredients in the emulsions.

Still another objective of the present invention is to avoid the use of acid additive, or other type of additive(s), as a destabilizer that would lead to corrosion issues, label issues, as well as security and environmental issues.

The present inventors have now found that the above objectives are met, in whole or in part, with the process of the present invention, which is now described in more details herein below. Still other objectives will appear in the below description of the present invention.

Therefore, according to a first aspect, the present invention relates to an improved process for the scratch-masking of containers, under both cold and wet conditions. Both laboratory tests and field experience showed that several parameters do influence the efficiency of masking, related to the emulsion stability.

More specifically, the present invention relates to a process for applying a scratch-masking aqueous emulsion on returnable glass containers, said process comprising at least the steps of:
a) preparing an aqueous emulsion of a scratch-masking formulation;
b) feeding the aqueous emulsion to a stabilizing zone; and
c) feeding the aqueous emulsion from the stabilizing zone to the glass container-coating device.

Step a) comprises, and advantageously consists in, the preparation of an aqueous emulsion, from a scratch-masking formulation and water. The emulsion may be prepared according to any conventional techniques known in the art, and for example by thoroughly mixing water and a scratch-masking formulation.

The so prepared aqueous formulation is then fed to a stabilizing zone (or buffer zone, or waiting zone), so that the prepared emulsion is maintained stable, all along the pipes to the coating device.

The stabilizing zone allows for the prepared emulsion to reach a stabilized state, which is necessary for the scratch-masking fluid to arrive to the applying device in the emulsion state, said emulsion being unstable and breaks by itself when in contact with the glass container.

The process of the invention therefore allows for the use of an emulsion which is stabilized enough throughout the whole piping of the installation, and unstable enough so that said emulsion breaks by itself when in contact with the glass container, without the use of a too large amount of surfactant, and without the use of emulsion destabilizer(s) or emulsion breaker(s), or at least with a lesser amount of emulsion destabilizer(s) or emulsion breaker(s) as commonly used in the art.

Accordingly the process of the invention may be qualified as a "physical" stabilizing/destabilizing emulsion process, in opposition to the known "chemical" stabilizing/destabilizing emulsion processes.

According to a preferred embodiment, the stabilizing zone is a dynamic stabilizing zone, i.e. the aqueous emulsion is maintained in the stabilizing zone under constant movement/agitation.

The stabilizing zone may therefore consists in any device wherein an amount of freshly prepared emulsion is maintained under constant movement/agitation so that the said emulsion does not break all along the feeding lines leading to the coating device, and automatically breaks by itself when applied onto the glass container.

Devices for the stabilizing zone are for examples vessels provided with mixing tools, agitating tools, such as anchors, propellers, magnetic stirrers, and the like. According to a preferred embodiment of the invention, the stabilizing zone comprises a recirculating loop wherein the freshly prepared emulsion is circulated at high speed in a pipe-loop. By "high speed" is meant that the emulsion is circulated at such speed that it is homogeneously supplied to the coating device, that is to say typically at a speed of between about 10 L/hour and about 100000 L/hour, advantageously between about 100 L/hour and 4000 L/hour, and preferably between about 200 L/hour and about 2500 L/hour.

The pipe-loop may vary in great proportions regarding its shape and size, mainly depending on the nature of the scratch-masking emulsion, the intrinsic stability of said emulsion, and the like. For example, the total volume of the pipe-loop may be comprised between 1 L or less and 500 L, preferably between 5 L to 200 L, although pipe-loops of smaller or larger volumes may be used. In principle the volume can be unlimited as long as the emulsion is circulated at such speed that it is homogeneously supplied to the coating device.

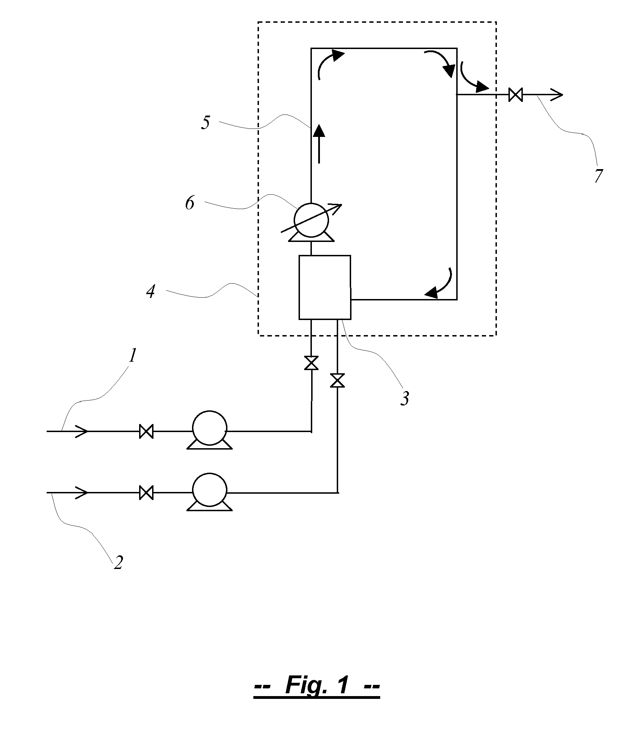

Figure 1 describes a schematic example of a system for implementing the process of the present invention. Feed line **1** contains a scratch-masking formulation and feed line **2** contains an aqueous or water phase. Both feed lines **1** and **2** arrive into a mixing device **3** so that an emulsion is formed. Alternatively the scratch-masking formulation of feed line **1** is directly injected into the aqueous or water phase of feed line **2** just before entering the mixing device **3** (not shown).

The freshly prepared emulsion enters the stabilizing zone **4,** which is in this example a recirculating loop (circulating pipe) **5,** wherein the emulsion is recirculated via a pump **6.** The emulsion is then transferred to the out-pipe **7** leading to the coating device. The stabilizing zone **4** may further comprise a buffer tank (not represented) so that a minimum amount of emulsion remains within the stabilizing zone **4** and is ready to be transferred to the out-pipe **7.**

According to a preferred embodiment, pump **6** is variable flow rate pump allowing for the variation of the circulation speed of the emulsion within the recirculating loop **5,** so that the stability of said emulsion may be finely tuned, as required by the glass coating conditions (coating on wet or dry glass ware, containing hot or warm liquids, important levels of scratches, scratch-masking efficiency of the scratch-masking formulation, and the like).

According to a further preferred embodiment, the mixing device **3,** and the pump **6,** which is preferably a variable flow rate pump, are one unique mixing and pumping device, that is to say the mixing device **3** allows for the preparation of the emulsion as well as the circulation of the freshly prepared emulsion all along within the stabilizing zone **4.**

Depending on the characteristics of the stabilizing zone (for example where the stabilizing zone is a recirculating loop: circulating speed, length of the recirculating loop, diameter of the recirculating pipe), the freshly prepared aqueous emulsion is maintained in said stabilizing zone during a few seconds to about 300 minutes, preferably during about 30 seconds to about 100 minutes, more preferably during about 1 minute to about 20 minutes.

As discussed herein-above, the process of the present invention relies on the fact that the stabilizing zone allows to maintain the stability of the freshly prepared emulsion all along the feeding pipes, so that the emulsion is still stable when it reaches the coating device.

The coating device may be any coating device known by the skilled in the art for applying scratch-masking aqueous emulsions onto returnable glass containers, such as devices appropriate for spray application (e.g. spray-guns), dipping or any other contact method (sponge, and the like), and the like. Spray-coating is the preferable method of application in the present invention.

According to an advantageous embodiment, the overload (e.g. overspray) and rinse down of the scratch-masking aqueous emulsion applied on the glass containers may be collected with any collecting means known in the art (e.g. such as collecting bins, funnels, and the like). According to a further advantageous embodiment, said collected overload/rinse down may be re-injected back into the stabilizing zone, preferably after filtration and/or quality checking according to methods well known in the art.

The process of the present invention provides for enhanced control of emulsion based glass surface masking coatings that is applicable in many types of application systems, such as those where the glass containers are warm as well as those where the glass containers are cold.

The process of the present invention can be employed in a variety of bottle handling operations, warm as well as cold application temperatures, as well as be adapted to changing conditions such as water variations or changes in condensation due to variation in humidity in the surrounding area.

Thanks to the presence of the stabilizing zone in the process of the present invention, it is possible to use oil-in-water emulsions that comprise a low amount of surfactant, said emulsions being known to be too unstable for use in conventional processes for applying scratch-masking emulsions.

Contrary to the currently used emulsions that generally comprise a high amount of surfactant, especially more than 20 weight%, the use of less than 15 weight%, preferably less than 10 weight%, still more preferably less than 8 weight%, of surfactant in the scratch-masking formulation provides excellent results, both in cold and wet conditions.

According to a preferred embodiment, the formulation used in the process of the invention comprises less than 15 wt%, more precisely from 0.1 wt% to 15 wt% of at least one surfactant and from 85 wt% to 99.9 wt% of at least one oil.

According to a further preferred embodiment, the above formulation comprises from 1 wt% to 10 wt% of at least one surfactant and from 90 wt% to 99 wt% of at least one oil. Still more preferably, the above formulation comprises from 1.5 wt% to 8 wt% of at least one surfactant and from 92 wt% to 98.5 wt% of at least one oil.

In the above formulations, any surfactant(s) and any oil(s) can be mixed together, provided that they are miscible the one in the other, and typically are able to form an aqueous oil-in-water emulsion. Moreover, preferred formulations to be used as oil-in-water emulsions are liquid formulations, solid formulations being not convenient as scratch-masking coatings.

The surfactants can be non-ionic, anionic, cationic or zwitterionic. Preferably, the surfactant(s) are non-ionic in order to avoid mixing problems with the oil(s), and, when anionic, to prevent salt formation when emulsified with ion-containing water.

According to a preferred aspect, the surfactant(s) used in the present invention may be chosen from among:
- alkoxylated (preferably ethoxylated and/or propoxylated) phenoxy alkyls;
- optionally alkoxylated (preferably ethoxylated and/or propoxylated) primary or secondary alcohols, such as, by way of non limiting examples, oleyl- or stearyl-alcohols;
- alkoxylated (preferably ethoxylated and/or propoxylated) alkylamines, such as, by way of non limiting examples, surfactants sold by CECA S.A., under the name Noramax^{®}, preferably Noramax^{®} S2, and Noramax^{®} S5;
- alkoxylated (preferably ethoxylated and/or propoxylated) acids, such as, by way of non limiting examples, oleic acid and palmitic acid;
- alkoxylated (preferably ethoxylated and/or propoxylated) esters, preferably glycerol esters; and
- sorbitan esters or alkoxylated (preferably ethoxylated and/or propoxylated) sorbitan esters.

When ethoxylated, the surfactants preferably comprise an average of up to 15 EO units per mole.

When the formulations are used in the process of the present invention for coating of glass containers in the food and beverage industry, the surfactant(s) are preferably chosen from among those listed in the European food additive list E numbers, more preferably from sections E400 to E499, and still more preferably from among the group of sorbitan esters, sections E491 to E496.

Mixtures of two or more surfactant(s) may be used.

Besides the surfactant(s), the formulation for use in the process of the present invention comprises at least one oil, which may be of any type known in the art. By "oil" is meant any compound, oil or polymer, that is miscible with the surfactant(s) but not miscible with water and capable of forming an oil-in-water emulsion, that is to say an oil or polymer discontinuous phase in an aqueous or water continuous phase.

Preferred oils may be for example chosen from among:
- polyolefins such as paraffins oils;
- fatty acids;
- fatty esters, preferably mono esters, having more than 10 carbon atoms, and preferably up to 40 carbon atoms;
- sorbitan esters or alkoxylated (preferably ethoxylated and/or propoxylated) sorbitan esters.
- glycol, mono-, and/or and di-esters; and
- glycerol, mono- and/or di- and/or tri-esters.

Mixtures of two or more oil(s) may be used.

When necessary and/or when desired, the above-described formulations comprising at least one surfactant and at least one oil, may also comprise one or more additives usually used and known in the art, such as, for example, those chosen from among:
- biocides, bactericides;
- dyes;
- emulsion destabilizers, such as acids;
- perfumes, odorants;
- UV absorbers, light absorbers, impact absorbers;
- and the like.

Such additives may be added in the formulation oil(s) + surfactant(s) and/or in the oil-in-water ready-to-use emulsion and/or in the aqueous phase or water used for forming the emulsion. According to a preferred embodiment the formulation for use in the present invention does not contain any additive, and preferably consists in a mixture of at least one oil and at least one surfactant, such as those described above.

As previously described, the formulation (oil(s) + surfactant(s)) is used as an oil-in-water emulsion, that is to say a water continuous phase having dispersed, or emulsified therein, an oil phase, wherein the oil phase is the scratch-masking coating.

The emulsion is typically prepared by mixing an oil phase-containing surfactant(s) with an aqueous or water phase. The oil phase and surfactant can be supplied as a concentrate to be mixed with water by the end user to form the treatment emulsion or supplied as a ready-to-use emulsion.

According to an alternative, the emulsion may be prepared by mixing water and at least one of the above-defined surfactants, then adding and mixing at least one of the above-defined oils, or prepared by mixing water and at least one of the above-defined oils, then adding and mixing at least one of the above-defined surfactants.

In other words, the scratch-masking emulsion to be fed into the stabilizing zone before being applied on the glass surface, may be prepared by mixing at least one oil, at least one surfactant and water, in any order, so as to obtained the desired oil-in-water emulsion.

The preferred concentrations of the oil phase in the as applied emulsions are from about 2% to 20% by weight, preferably from about 2.5% to 15% by weight, more preferably from about 3% to 10% by weight of the total weight of the oil-in-water emulsion. Variations in water quality such as pH or hardness can impact the quality and stability of the final treatment emulsion when supplied as a concentrate for mixing with "local" water.

The formulations for use in the process of the present invention, although comprising a relatively low amount of surfactant(s), surprisingly show outstanding results even when used in spray-coating cabinets presenting complex layout of filling lines (i.e. cabinets with a number of valves, fittings, long feed pipes, and the like).

Such low-containing surfactant emulsions would generally be too unstable and would break before being applied on the glass surfaces. The stabilizing zone, which is part of the process of the present invention, allows such low-containing surfactant emulsions to remain stable until their use as scratch-masking emulsions.

The emulsion to be fed into the stabilizing zone is obtained by thoroughly mixing water, at least one surfactant, and at least one oil, as described above. Any mixing device known in the art is appropriate, provided that, depending on parameters and layout, the amount of mixing energy is set in such a way that homogeneous emulsion is supplied to the applicator but of limited emulsion stability.

The mixing energy devoted to the preparation of the above described oil-in-water emulsion should be set so that the emulsion is stable for a period time ranging from a few seconds to a few hours, and preferably for period of time that is adapted so as to supply a homogenous working liquid to the applicator. This period of time therefore depends on the flow lines, application devices, and the like.

Any mixing means may be used to achieve an oil-in water-emulsion from water and the above-described formulation. Typical mixers or emulsifying devices are those known in the art, and as non limiting examples, mention may be made of dynamic mixers, static mixers, ultra-sonic mixing devices, pumps, and the like.

As described above, the present invention provides a process for applying a coating, typically a scratch-masking coating, to a glass container surface, such as bottles, that is adaptable to a variety of glass surface and application conditions.

The coating provides for masking of scratches and abrasions on the glass container surface, which adversely impact its commercial value. For examples, scratches or abrasions on glass bottles, especially on returnable glass bottles used for beverages, result in an undesirable haze or white appearance, which decreases the value of the bottle. The process of the present invention provides a coating for glass containers that masks such scratches or abrasions. In addition, the coating can enhance the lubricity of the container surface.

Moreover, and thanks to the process of the present invention comprising a step of allowing the emulsion in a stabilizing zone, preferably under dynamic conditions, the low amount of surfactant(s), as well as the neutral or almost neutral pH of the emulsion, leads to less, or even no, corrosion, security or environmental issues. Additionally, dyes in labels, which are generally known to be surfactant sensitive, are far much less affected, while using low oil-in-water emulsion as described in the present invention.

According to another feature, the process of the present invention further comprises a step d) wherein the scratch-masking coating emulsion is applied to a glass surface, more specifically to a glass container surface, such as bottles, onto at least one part of, or onto the entire, outer surface of said glass container.

Still further steps may be present along the process of the present invention, such as, and in a non limiting way:
- washing of the glass container;
- applying a lubricant onto the outer surface of said glass container;
- filling and capping the glass container; and
- labelling the glass container.

The washing of the glass container may be realised according to any method well known in the art, and for example using water, preferably hot water, more preferably together with one or more detergent, for example a base, such as sodium hydroxide.

At least one lubricant can also be applied onto the outer surface of the glass container after washing. Such lubricants are known in the field, such as for example Tegoglass^{®} 3000 Plus provided by Arkema.

The glass containers are then filled and capped, again according to known methods, with cold, tepid, or even warm liquids. As evidenced by the annexed examples, the efficiency of the scratch-masking coating applied according to the process of the present invention is not adversely affected by the condensation that may appear on the outer surface of the glass container, because of differences of temperatures between the glass container, the filled liquid, and/or the outer temperature and relative humidity of the environment.

Labelling may be realised before or after applying the scratch-masking emulsion. Washing, applying the lubricant, filling and capping the containers are preferably operated before applying the scratch-masking emulsion.

Should the labelling step be realised before the scratch-masking coating step, the step consisting in applying the scratch-masking emulsion may thus be the last step before the newly washed, refilled and labelled glass containers are once again put on the market, and sold to the customers.

The process of the present invention is therefore well adapted to existing equipments for refilling returnable glass containers, such as equipments where the returnable glass containers are placed on conveyer belts and undergo all or parts of the above described washing, refilling, capping, scratch-masking, and labelling steps.

Apart from the "stabilizing zone" device, no specific equipment is required for carrying out the process of the invention, this meaning that any and all known equipments in the art are convenient for the use and process of the invention.

The application equipment typically includes mixing and storage vessels, pumps, transfer and feed lines, spray apparatus and control and monitoring equipment.

The equipment may also comprise controlling means aiming at monitoring the flow rates in the feeding lines, the conditions in the stabilizing zone (mixing speed, recirculation speed, residence time, and the like), the process of applying the scratch-masking emulsion. Such controlling means may be for example optical means detecting the presence or the absence of a container in front of the applying means, and/or detecting the presence and the quantity of scuff bands or scratches, so that the minimum amount of emulsion is applied on the containers to obtain the best efficiency. According to a preferred aspect, the controlling means are monitored via a computer that may interact with the dosing pump(s), valves, mixing speed and applying means.

Still according to a preferred embodiment, the above described equipment may be encased within a "scratch-masking" cabinet that can be easily adapted to existing bottling lines, comprising the necessary equipment for washing, filling, capping and labelling glass containers, typically returnable glass bottles.

As described herein-before, the equipment for applying a scratch-masking coating onto returnable glass containers comprises a stabilizing zone, preferably a dynamic stabilizing zone, which forms the very subject matter of the present invention.

A particularly well adapted "stabilizing zone" device is a recirculating loop when using scratch-masking coatings in the form of oil-in-water emulsion wherein the oil phase comprises at least one surfactant at low concentration, typically from 0.1 wt% to 15 wt%, preferably from 1 wt% to 10 wt%, and more preferably from 1.5 wt% to 8 wt%. Such a recirculating loop comprising a scratch-masking oil-in-water emulsion is also part of the present invention.

According to still a further object, the present invention also encompasses the use of such a recirculating loop in a process for applying a scratch-masking coating on returnable glass containers.

The present invention is illustrated in more detail in the following nonlimiting examples.

### Examples

Various tests are conducted with various scratch-masking formulations in a system as shown in Figure 1, equipped with a buffer tank. To this tank is added a water stream in which the scratch-masking formulation is injected to give an emulsion with a set concentration.

The emulsion is circulated through the circulating pipe at approximately 2000 L/h, while the applied amount is between about 2 L/h and 50 L/h, or even higher, depending on bottle size, and line speed, say for example 500 mL bottle size, running at a speed of about 10000 bottles per hour to 50000 bottles per hour.

The diameter of the circulating pipe is such that pressure drop over the circulating pipe is minimized. The circulating pipe has the specifications shown in Table 1 below:

**-- Table 1 --**

| **Total circulating pipe length (m)** | **Internal diameter of the circulating pipe (mm)** |
|---|---|
| 10 | 25 |
| 50 | 35 |
| 100 | 42 |
| 220 | 48 |

Emulsions prepared with formulations having more than 20 wt% of surfactant(s) are stable enough, so that the use of the circulating pipe is not necessary. However, when applied on cold bottles (10°C to 12°C), condensation forms on the outside of the glass containers and the applied emulsion is rinsed off, and the scratch-masking appearance is not satisfactory.

Emulsions prepared from scratch-masking formulations with less than 15 wt%, and even with less than 8 wt% of surfactants in the oil phase have limited stability. Such emulsions are fed into a recirculating loop, as described herein before, having a total length of 50 meters or of 100 meters, at a speed rate of between 1500 L/h and 2000 L/h. The total volume of the recirculating loop is between 100 L and 200 L.

The emulsions are recirculated during about 4 minutes to 10 minutes. Longer residence times may be applied, however 10 minutes are generally sufficient to obtain a suitable stability of the emulsions until they reach the coating device and the glass containers. Such emulsions are sprayed on cold (10°C to 12°C) and wet (due to condensation) bottles, at for example a rate of about 0.01 mL/bottle to about 10 mL/bottle, preferably of about 0.1 mL/bottle to about 1 mL/bottle, these figures being based on a 500 mL bottle size.

The emulsions generally have a stability limit of about 10 minutes. Depending on the coating conditions (temperature of the containers, ambient humidity, amount of scratch-masking composition to be coated, length of the pipes till the coating device, and the like), this stability limit may be lengthened or shortened by varying the mixing means (preparation of the emulsions), by varying the mixing speed, by varying the speed rate into the stabilizing zone, and/or by varying the length of the circulating pipe of the stabilizing zone.

The process of the invention therefore presents the advantage of an easy optimising of the emulsion stability for each situation.

Using the process according to the present invention, and an aqueous emulsion comprising from 2 wt% to 20 wt% of an oil phase, wherein the oil phase comprises less than 8 wt% surfactant (based on the total weight of the oil phase), excellent masking of scratches can be obtained on wet and cold bottles, under the above-indicated conditions: scuff are masked, the glass containers have a "new glass" appearance, while still presenting a normal touch sensation.

The process of the present invention is also perfectly suitable with such "low-stability" emulsions (having a low level of surfactant) for scratch-masking of glass containers/bottles under dry and hot conditions.

## Claims

1. Process for applying a scratch-masking aqueous emulsion on returnable glass containers, said process comprising at least the steps of:
a) preparing an aqueous emulsion of a scratch-masking formulation;
b) feeding the aqueous emulsion to a stabilizing zone; and
c) feeding the aqueous emulsion from the stabilizing zone to the glass container-coating device.

2. Process according to claim 1, wherein the stabilizing zone is a dynamic stabilizing zone.

3. Process according to claim 1, wherein the stabilizing zone comprises a recirculating loop wherein the emulsion prepared at step a) is circulated at high speed in a pipe-loop, typically at a speed of between about 10 L/hour and about 100000 L/hour, advantageously between about 100 L/hour and 4000 L/hour, and preferably between about 200 L/hour and about 2500 L/hour.

4. Process according to claim 1, wherein the emulsion is maintained in said stabilizing zone during a few seconds to about 300 minutes, preferably during about 30 seconds to about 100 minutes, more preferably during about 1 minute to about 20 minutes.

5. Process according to claim 1, wherein the scratch-masking formulation comprises from 0.1 wt% to 15 wt% of at least one surfactant and from 85 wt% to 99.9 wt% of at least one oil, preferably from 1 wt% to 10 wt% of at least one surfactant and from 90 wt% to 99 wt% of at least one oil, and more preferably, from 1.5 wt% to 8 wt% of at least one surfactant and from 92 wt% to 98.5 wt% of at least one oil.

6. Process according to claim 1, wherein the scratch-masking formulation comprises at least one surfactant chosen from among:
• alkoxylated (preferably ethoxylated and/or propoxylated) phenoxy alkyls;
• optionally alkoxylated (preferably ethoxylated and/or propoxylated) primary or secondary alcohols;
• alkoxylated (preferably ethoxylated and/or propoxylated) alkylamines;
• alkoxylated (preferably ethoxylated and/or propoxylated) acids;
• alkoxylated (preferably ethoxylated and/or propoxylated) esters, preferably glycerol esters; and
• sorbitan esters or alkoxylated (preferably ethoxylated and/or propoxylated) sorbitan esters.

7. Process according to claim 1, wherein the scratch-masking formulation comprises at least one oil chosen from among:
• polyolefins such as paraffins oils;
• fatty acids;
• fatty esters, preferably mono esters, having more than 10 carbon atoms, and preferably up to 40 carbon atoms;
• sorbitan esters or alkoxylated (preferably ethoxylated and/or propoxylated) sorbitan esters.
• glycol, mono-, and/or and di-esters; and
• glycerol, mono- and/or di- and/or tri-esters.

8. Process according to claim 1, wherein the scratch-masking formulation further comprises one or more additives chosen from among biocides, bactericides, dyes, emulsion destabilizers, perfumes, odorants, UV absorbers, light absorbers, impact absorbers, and the like.

9. Process according to claim 1, wherein the concentration of the oil phase in the scratch-masking emulsion is from about 2% to 20% by weight, preferably from about 2.5% to 15% by weight, more preferably from about 3% to 10% by weight of the total weight of the oil-in-water emulsion.

10. Process according to claim 1 further comprising a step d) wherein the scratch-masking coating emulsion is applied to a glass surface, more specifically to a glass container surface, such as bottles, onto at least one part of, or onto the entire, outer surface of said glass container, by means of a coating device, such as devices appropriate for spray application, dipping or any other contact method, and the like.

11. Recirculating loop comprising a scratch-masking oil-in-water emulsion.

12. Recirculating loop according to claim 11, wherein the oil phase of said oil-in-water emulsion comprises at least one surfactant in an amount of from 0.1 wt% to 15 wt%, preferably from 1 wt% to 10 wt%, and more preferably from 1.5 wt% to 8 wt%.

13. Use of a recirculating loop according to any of claims 11 or 12 in a process for applying a scratch-masking coating on returnable glass containers.
